# FASCICULE DE BREVET EUROPEEN

(11) **EP 1 097 851 B1**
(45) Date de publication et mention de la délivrance du brevet: **22.03.2006**
(21) Numéro de dépôt: 00402999.7
(22) Date de dépôt: 27.10.2000
(51) Int. Cl.: B60T 11/06, B60T 7/10, B60T 13/74

(54) **Boitier de frein de parking pour véhicule automobile et procédé de montage de ce boitier**
Feststellbremsgehäuse für ein Kraftfahrzeug und Montageverfahren dieses Gehäuses
Parking brake housing for a motor car and mounting procedure of the housing

(30) Priorité: 04.11.1999 FR 9913818
(43) Date de publication de la demande: 09.05.2001
(73) Titulaire: Renault s.a.s., 92100 Boulogne Billancourt (FR)
(72) Inventeur: Machon, René-Paul, 91000 Evry (FR); Quertinmont, Jean-Luc, 78460 Chevreuse (FR)

(56) Documents cités:
- WO-A-99/30939
- US-A- 5 004 077

## Description

On connaît de la demande internationale WO 99 30940 un boîtier de frein de parking destiné à être monté sur le berceau arrière d'un véhicule automobile de manière à pouvoir bloquer sélectivement les roues arrière de ce véhicule.

S'il est vrai que ce boîtier présente notamment comme avantage d'être relativement compact, il n'en demeure pas moins que sa forme n'est adaptée qu'à certains modèles de véhicules automobiles.

Ainsi, par exemple, ce boîtier ne peut pas être monté sur des modèles dans lesquels une fixation sur le berceau arrière n'est pas possible.

Pour de tels modèles, il est nécessaire de concevoir une autre forme de boîtier, ce qui engendre des surcoûts non négligeables.

On connaît également du document US 5 004 077 un boîtier de frein de parking comprenant trois pattes de fixation situées dans un même plan.

Rien dans ce document n'indique qu'un tel boîtier est adaptable à différents types de véhicules automobiles.

La présente invention a pour but de fournir un boîtier de frein de parking pour véhicule automobile qui puisse être monté sur une grande variété de modèles de véhicules.

On atteint ce but de l'invention avec un boîtier de frein de parking pour véhicule automobile, remarquable en ce qu'il comprend différents moyens de fixation dont certains peuvent être sélectivement utilisés à l'exclusion des autres pour fixer ledit boîtier sur différents modèles de véhicules automobiles.

Grâce à ces caractéristiques, on peut concevoir une seule forme de boîtier de frein de parking pour différents modèles de véhicules automobiles, et utiliser ceux des moyens de fixation de ce boîtier qui sont adaptés à chaque modèle de véhicule.

Suivant d'autres caractéristiques de l'invention:
- lesdits moyens de fixation comprennent au moins deux oreilles situées sur une première face dudit boîtier, munies de trous de manière à permettre de fixer ledit boîtier notamment sur un berceau arrière de véhicule automobile par l'intermédiaire de cornières,
- lesdits moyens de fixation comprennent au moins deux rails situés sur ladite première face dudit boîtier, munis d'échancrures à leurs extrémités de manière à permettre de fixer ledit boîtier notamment sous une caisse de véhicule automobile par l'intermédiaire de pattes de liaison,
- ledit boîtier comprend au moins un plot situé sur une deuxième face dudit boîtier opposée à ladite première face, destiné à coopérer avec une platine de support sensiblement annulaire solidaire notamment dudit berceau arrière de manière à renforcer la liaison dudit boîtier avec ce berceau arrière, ou à coopérer avec au moins un organe de guidage solidaire d'une plate-forme de montage de manière à permettre le positionnement correct dudit boîtier sur cette plate-forme,
- ledit boîtier comprend deux plots situés sensiblement au droit desdites oreilles et/ou desdits rails, destinés à coopérer avec deux platines de support sensiblement annulaires.

La présente invention concerne également un ensemble de berceau arrière de véhicule automobile et de boîtier conforme à ce qui précède, remarquable en ce que ledit boîtier est relié audit berceau arrière d'une part par des cornières coopérant avec lesdites oreilles, et d'autre part par des platines de support sensiblement annulaires coopérant avec lesdits plots.

Suivant une autre caractéristique de cet ensemble, des tampons en caoutchouc sont interposés entre lesdites platines de support sensiblement annulaires et lesdits plots.

La présente invention concerne aussi un ensemble de caisse de véhicule automobile et de boîtier conforme à ce qui précède, remarquable en ce que ledit boîtier est relié à ladite caisse par deux pattes de liaison coopérant avec lesdits rails.

Suivant une autre caractéristique de cet ensemble, des blocs filtrants en caoutchouc sont interposés entre lesdites pattes de liaison et lesdits rails.

La présente invention concerne également un procédé de montage d'un ensemble de berceau arrière et de boîtier de frein de parking conforme à ce qui précède sur une caisse de véhicule automobile, remarquable en ce qu'il comprend les étapes consistant:
- à fixer lesdites cornières sur lesdites oreilles,
- à placer le(s)dit(s) plot(s) dans ladite (lesdites) platine(s) sensiblement annulaire(s),
- à fixer lesdites cornières sur la partie supérieure dudit berceau arrière, et
- à monter ledit berceau arrière sur ladite caisse.

La présente invention concerne encore un procédé de montage d'un boîtier de frein de parking conforme à ce qui précède sur une caisse de véhicule automobile, remarquable en ce qu'il comprend les étapes consistant:
- à monter lesdites pattes de liaison sur les échancrures desdits rails,
- à placer ledit boîtier sur une plate-forme de montage comprenant une pluralité d'organes de guidage de manière que l'un au moins de ces organes coopère avec l'un desdits plots,
- à déplacer ladite plate-forme de manière à amener ledit boîtier sous ladite caisse, et
- à fixer lesdites pattes de liaison sous ladite caisse.

Grâce à ces caractéristiques, on peut monter le boîtier selon l'invention sur un véhicule automobile avec le minimum d'opérations élémentaires.

D'autres caractéristiques et avantages de l'invention apparaîtront à la lumière de la description qui va suivre et à l'examen du dessin annexé, dans lequel:
- la figure 1 est une vue en perspective du boîtier de frein de parking selon l'invention,
- la figure 2 est une vue en coupe de ce boîtier lorsqu'il est monté sur un berceau arrière de véhicule automobile, et
- la figure 3 est une vue en perspective de ce boîtier lors de son montage sur une caisse de véhicule automobile.

Sur ces figures, des références numériques identiques désignent des organes ou ensembles d'organes identiques ou analogues.

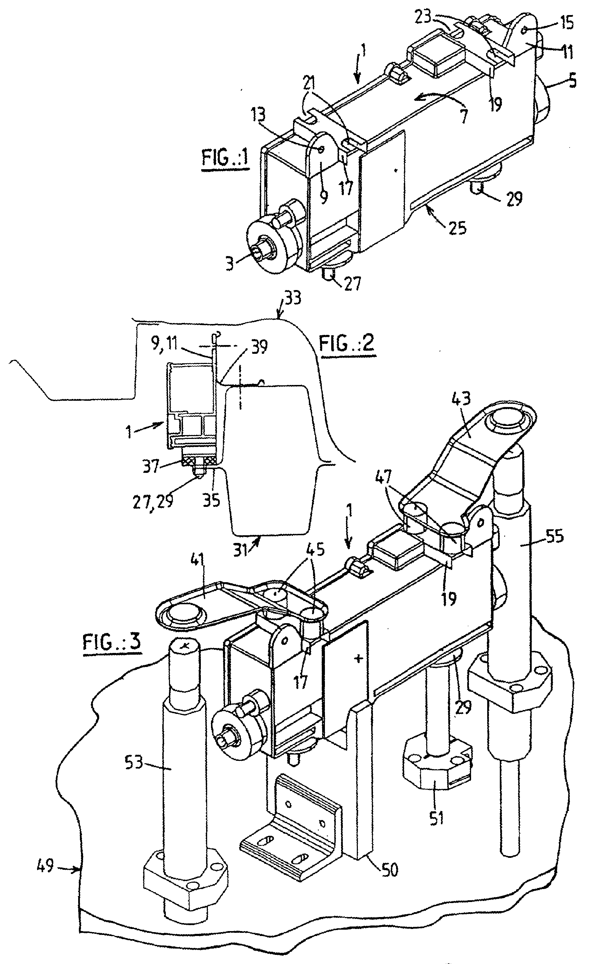

On se reporte à présent à la figure 1, sur laquelle on voit que le boîtier selon l'invention 1 définit un volume de forme sensiblement parallélépipédique, muni d'orifices 3, 5 destinés à permettre le passage de câbles permettant d'actionner, sous l'effet d'un moteur électrique logé dans ce boîtier, des freins de parking placés sur les roues d'un véhicule automobile.

Ces organes connus en soi ne sont pas représentés sur le dessin annexé, mais on pourra utilement se reporter à la demande internationale WO 99 30940 susmentionnée pour plus de précision.

Sur une première face 7 destinée à être placée vers le haut une fois que le boîtier 1 est monté, se trouvent des moyens de fixation comprenant d'une part deux oreilles 9, 11 munies de trous 13, 15, et d'autre part deux rails 17, 19 munis à leurs extrémités d'échancrures 21, 23.

Sur une deuxième face 25 opposée à la première face 7, se trouvent au moins un, et de préférence deux plots 27, 29 situés sensiblement au droit des rails 17, 19.

Les oreilles 9, 11, les plots 27, 29 et les rails 17, 19 peuvent être formés par moulage avec le boîtier 1.

On se reporte à présent à la figure 2, sur laquelle on voit la manière dont le boîtier 1 est monté sur un berceau arrière 31 placé sous la caisse 33 d'un véhicule automobile.

Les deux plots 27, 29 coopèrent avec deux platines de support sensiblement annulaires solidaires du berceau arrière 31, une seule 35 de ces platines étant visible sur la figure 2.

Des tampons en caoutchouc 37 sont de préférence interposés entre chacun des plots 27, 29 et les platines de support correspondantes.

Les deux oreilles 9, 11 sont reliées par des moyens de fixation tels que des vis à deux cornières elles-mêmes fixées sur la partie supérieure du berceau arrière 31, une seule 39 de ces cornières étant visible sur la figure 2.

On se reporte à présent à la figure 3, sur laquelle on voit le boîtier 1 lors de son montage sur la caisse (non représentée) d'un véhicule automobile.

Pour ce montage, le boîtier 1 est équipé de deux pattes de liaison 41, 43 reliées par des organes tels que des blocs filtrants en caoutchouc 45, 47 aux échancrures 21, 23 formées sur les rails 17, 19.

Le mode de montage et les avantages du boîtier selon l'invention découlent directement de la description qui précède.

Lorsqu'on souhaite monter ce boîtier 1 sur un berceau arrière 31 (voir figure 2), on procède de la manière suivante.

En dehors de la chaîne de montage, on fixe les cornières 39 sur les oreilles 9, 11.

Dans la chaîne de montage et avant de rapporter le berceau arrière 31 sous la caisse 33, on vient placer les plots 27, 29 dans les platines de support 35 correspondantes, puis on fixe les cornières 39 sur la partie supérieure du berceau arrière 31.

Enfin, on vient fixer le berceau arrière 31 sous la caisse 33.

Lorsqu'on souhaite monter le boîtier 1 directement sur la caisse d'un véhicule automobile (voir figure 3), on commence par monter les pattes de liaison 41, 43 sur les échancrures des rails 17, 19, par l'intermédiaire des blocs filtrants en caoutchouc 45, 47.

Ensuite, on place le boîtier 1 sur une plate-forme de montage 49 comprenant au moins un organe de guidage en U 50 et un organe de guidage tubulaire 51 de telle manière que l'organe 50 coopère avec le boîtier 1 lui-même et que l'organe 51 coopère avec l'un 29 des plots 27, 29.

Grâce à ces organes de guidage, on peut positionner le boîtier 1 avec précision sur la plate-forme 49.

On déplace ensuite cette plate-forme de manière à amener les pattes de liaison 41, 43 sous la caisse du véhicule, puis on fixe ces pattes par exemple à l'aide de visseuses 53, 55.

Comme on peut le comprendre à la lumière de ce qui précède, le boîtier de frein de parking selon l'invention peut être monté indifféremment et très simplement sur un berceau arrière ou sous une caisse de véhicule automobile, grâce aux différents moyens de fixation (oreilles 9, 11, rails 17, 19) dont il est pourvu.

Ce boîtier permet ainsi de supprimer les surcoûts liés à l'utilisation de boîtiers dont les formes diffèrent en fonction des modèles de véhicules sur lesquels ils sont destinés à être montés.

On remarquera en outre que le boîtier selon l'invention peut être très facilement démonté.

Dans le cas où ce boîtier est fixé sur un berceau arrière (voir figure 2), il suffit de défaire les organes de fixation reliant les oreilles 9, 11 aux cornières 39, puis de soulever le boîtier 1 pour déloger les plots 27, 29 des platines de support 35.

Dans le cas où ce boîtier est fixé directement sous la caisse d'un véhicule automobile, il suffit de défaire les organes de fixation reliant les pattes de liaison 41, 43 à cette caisse.

Ce démontage aisé facilite nettement les interventions d'entretien et/ou de réparation par rapport au boîtier de la technique antérieure.

On notera également que l'utilisation de tampons en caoutchouc 37 et de blocs filtrants en caoutchouc 45, 47 permet d'absorber les efforts transmis au boîtier 1, et ainsi d'éviter les déformations telles que le vrillage de ce boîtier.

Bien entendu, la présente invention n'est nullement limitée au mode de réalisation décrit et représenté, fourni à titre d'exemple illustratif et non limitatif.

## Revendications

1. Boîtier de frein de parking (1) pour véhicule automobile, **caractérisé en ce qu'**il comprend différents moyens de fixation (9, 11, 17, 19, 27, 29) dont certains peuvent être sélectivement utilisés à l'exclusion des autres pour fixer ledit boîtier (1) sur différents modèles de véhicules automobiles.

2. Boîtier (1) selon la revendication 1, **caractérisé en ce que** lesdits moyens de fixation (9, 11, 17, 19, 27, 29) comprennent au moins deux oreilles (9, 11) situées sur une première face (7) dudit boîtier (1), munies de trous (13, 15) de manière à permettre de fixer ledit boîtier (1) notamment sur un berceau arrière (31) de véhicule automobile par l'intermédiaire de cornières (39).

3. Boîtier (1) selon l'une des revendications 1 ou 2, **caractérisé en ce que** lesdits moyens de fixation (9, 11, 17, 19, 27, 29) comprennent au moins deux rails (17, 19) situés sur ladite première face (7) dudit boîtier (1), munis d'échancrures (21, 23) à leurs extrémités de manière à permettre de fixer ledit boîtier (1) notamment sous une caisse de véhicule automobile par l'intermédiaire de pattes de liaison (41, 43).

4. Boîtier (1) selon l'une des revendications 2 ou 3, **caractérisé en ce qu'**il comprend au moins un plot (27, 29) situé sur une deuxième face (25) dudit boîtier (1) opposée à ladite première face (7), destiné à coopérer avec une platine de support sensiblement annulaire (35) solidaire notamment dudit berceau arrière (31) de manière à renforcer la liaison dudit boîtier (1) avec ce berceau arrière (31), ou à coopérer avec au moins un organe de guidage (50, 51) solidaire d'une plate-forme de montage (49) de manière à permettre le positionnement correct dudit boîtier (1) sur cette plate-forme (49).

5. Boîtier (1) selon la revendication 4, **caractérisé en ce qu'**il comprend deux plots (27, 29) situés sensiblement au droit desdites oreilles (9, 11) et/ou desdits rails (17, 19), destinés à coopérer avec deux platines de support sensiblement annulaires (35).

6. Ensemble de berceau arrière (31) de véhicule automobile et de boîtier (1) conforme à la revendication 2 prise en combinaison avec l'une des revendications 4 ou 5, **caractérisé en ce que** ledit boîtier (1) est relié audit berceau arrière (31) d'une part par des cornières (39) coopérant avec lesdites oreilles (9, 11), et d'autre part par des platines de support sensiblement annulaires (35) coopérant avec lesdits plots (27, 29).

7. Ensemble selon la revendication 6, **caractérisé en ce que** des tampons en caoutchouc (37) sont interposés entre lesdites platines de support sensiblement annulaires (35) et lesdits plots (27, 29).

8. Ensemble de caisse de véhicule automobile et de boîtier (1) conforme à l'une quelconque des revendications 3 à 5, **caractérisé en ce que** ledit boîtier (1) est relié à ladite caisse par deux pattes de liaison (41, 43) coopérant avec lesdits rails (17, 19).

9. Ensemble selon la revendication 8, **caractérisé en ce que** des blocs filtrants en caoutchouc (45, 47) sont interposés entre lesdites pattes de liaison (41, 43) et lesdits rails (17, 19).

10. Procédé de montage d'un ensemble de berceau arrière (31) et de boîtier de frein de parking (1) conforme à l'une des revendications 6 ou 7 sur une caisse de véhicule automobile, **caractérisé en ce qu'**il comprend les étapes consistant:
- à fixer lesdites cornières (39) sur lesdites oreilles (9, 11),
- à placer le(s)dit(s) plot(s) (27, 29) dans ladite (lesdites) platine(s) sensiblement annulaire(s) (35),
- à fixer lesdites cornières (39) sur la partie supérieure dudit berceau arrière (31), et
- à monter ledit berceau arrière (31) sur ladite caisse (33).

11. Procédé de montage d'un boîtier de frein de parking (1) conforme à l'une des revendications 8 ou 9 prise en combinaison avec l'une des revendications 4 ou 5 sur une caisse de véhicule automobile, **caractérisé en ce qu'**il comprend les étapes consistant:
- à monter lesdites pattes de liaison (41, 43) sur les échancrures (21, 23) desdits rails (17, 19),
- à placer ledit boîtier (1) sur une plate-forme de montage (49) comprenant une pluralité d'organes de guidage (50, 51) de manière que l'un au moins (51) de ces organes coopère avec l'un (29) desdits plots (27, 29),
- à déplacer ladite plate-forme (49) de manière à amener ledit boîtier (1) sous ladite caisse, et
- à fixer lesdites pattes de liaison (41, 43) sous ladite caisse.

## Claims

1. A parking brake housing (1) for an automobile vehicle, **characterised in that** it comprises various fastening means (9, 11, 17, 19, 27, 29) some of which may be selectively used to the exclusion of the others in order to secure the housing (1) on various automobile vehicle models.

2. A housing (1) as claimed in claim 1, **characterised in that** the fastening means (9, 11, 17, 19, 27, 29) comprise at least two lugs (9, 11) disposed on a first surface (7) of the housing (1) which are provided with holes (13, 15) in order to make it possible to secure the housing (1) in particular on a rear mounting (31) of the automobile vehicle by means of angle brackets (39).

3. A housing (1) as claimed in one of claims 1 or 2, **characterised in that** the fastening means (9, 11, 17, 19, 27, 29) comprise at least two rails (17, 19) disposed on the first surface (7) of the housing (1) which are provided with scallops (21, 23) at their ends in order to be able to secure the housing (1) in particular below an automobile vehicle body by means of connection brackets (41, 43).

4. A housing (1) as claimed in one of claims 2 or 3, **characterised in that** it comprises at least one pin (27, 29) disposed on a second surface (25) of the housing (1) opposite the first surface (7) which is adapted to cooperate with a substantially annular support plate (35) rigid in particular with the rear mounting (31) so as to strengthen the connection of the housing (1) with this rear mounting (31), or to cooperate with at least one guide member (50, 51) rigid with an assembly platform (49) so as to enable the correct positioning of the housing (1) on this platform (49).

5. A housing (1) as claimed in claim 4, **characterised in that** it comprises two pins (27, 29) disposed substantially at right angles to the lugs (9, 11) and/or the rails (17, 19) and adapted to cooperate with two substantially annular support plates (35).

6. An assembly of a rear mounting (31) of an automobile vehicle and a housing (1) as claimed in claim 2 taken in conjunction with one of claims 4 or 5, **characterised in that** the housing (1) is connected to the rear mounting (31) by angle brackets (39) cooperating with the lugs (9, 11) and by substantially annular support plates (35) cooperating with the pins (27, 29).

7. An assembly as claimed in claim 6, **characterised in that** rubber buffers (37) are interposed between the substantially annular support plates (35) and the pins (27, 29).

8. An assembly of an automobile vehicle body and a housing (1) as claimed in any one of claims 3 to 5, **characterised in that** the housing (1) is connected to this body by two connection brackets (41, 43) cooperating with the rails (17, 19).

9. An assembly as claimed in claim 8, **characterised in that** rubber filter blocks (45, 47) are interposed between the connection brackets (41, 43) and the rails (17, 19).

10. A method of assembly of an assembly of a rear mounting (31) and a parking brake housing (1) as claimed in one of claims 6 or 7 on an automobile vehicle body, **characterised in that** it comprises the stages of:
- securing the angle brackets (39) on the lugs (9, 11),
- disposing the pin(s) (27, 29) in the substantially annular plate(s) (35),
- securing the angle brackets (39) on the upper portion of the rear mounting (31),
- mounting the rear mounting (31) on the body (33).

11. A method of assembly of a parking brake housing (1) as claimed in one of claims 8 or 9 taken in conjunction with one of claims 4 or 5 on an automobile vehicle body, **characterised in that** it comprises the steps of:
- mounting the connection brackets (41, 43) on the scallops (21, 23) of the rails (17, 19),
- placing the housing (1) on an assembly platform (49) comprising a plurality of guide members (50, 51) so that at least one (51) of these members cooperates with one (29) of the pins (27, 29),
- displacing the platform (49) so as to bring the housing (1) below the body,
- securing the connection brackets (41, 43) below the bodywork.

## Patentansprüche

1. Gehäuse einer Feststellbremse (1) für ein Kraftfahrzeug, **dadurch gekennzeichnet, dass** es verschiedene Befestigungsmittel (9, 11, 17, 19, 27, 29) aufweist, von denen bestimmte selektiv unter Ausschluss von anderen zum Befestigen des Gehäuses (1) an verschiedenen Modellen von Kraftfahrzeugen verwendet werden können.

2. Gehäuse (1) nach Anspruch 1, **dadurch gekennzeichnet, dass** die Befestigungsmittel (9, 11, 17, 19, 27, 29) mindestens zwei Ösen (9, 11) aufweisen, die auf einer ersten Seite (7) des Gehäuses (1) angeordnet sind, welche mit Löchern (13, 15) derart ausgestattet sind, um es zu erlauben, das Gehäuse (1) insbesondere an einem hinteren Träger (31) des Kraftfahrzeugs über Winkelprofile (39) zu befestigen.

3. Gchäuse (1) nach einem der Ansprüche 1 oder 2, **dadurch gekennzeichnet, dass** die Befestigungsmittel (9, 11, 17, 19, 27, 29) mindestens zwei Schienen (17, 19) aufweisen, welche auf der ersten Seite (7) des Gehäuses (1) angeordnet sind, die mit Aussparungen (21, 23) an ihren Enden derart versehen sind, um es zu erlauben, das Gehäuse (1) insbesondere unter einer Karosserie eines Kraftfahrzeugs über Verbindungsstücke (41, 43) zu befestigen.

4. Gehäuse (1) nach einem der Ansprüche 2 oder 3, **dadurch gekennzeichnet, dass** es mindestens einen Stift (27, 29) aufweist, der auf einer zweiten Seite (25) des Gehäuses (1) gegenüberliegend zu der ersten Seite (7) angeordnet ist, der dafür bestimmt ist, mit einer im Wesentlichen ringförmigen Trägerplatte (35), die insbesondere mit dem hinteren Träger (31) fest verbunden ist, derart zusammenzuwirken, um die Verbindung des Gehäuses (1) mit diesem hinteren Träger (31) zu verstärken oder um mit mindestens einem Führungsbauteil (50, 51), das fest mit einer Montageplattform (49) verbunden ist, derart zusammenzuwirken, um die richtige Positionierung des Gehäuses (1) auf dieser Plattform (49) zu erlauben.

5. Gehäuse (1) nach Anspruch 4, **dadurch gekennzeichnet, dass** es zwei Stifte (27, 29) aufweist, welche im Wesentlichen rechtwinklig zu den Ösen (9, 11) und/oder den Schienen (17, 19) angeordnet sind, welche dafür bestimmt sind, mit zwei im Wesentlichen ringförmigen Trägerplatten (35) zusammenzuwirken.

6. Gesamtheit eines hinteren Trägers (31) eines Kraftfahrzeugs und eines Gehäuses (1) entsprechend zu Anspruch 2 in Kombination mit einem der Ansprüche 4 oder 5, **dadurch gekennzeichnet, dass** das Gehäuse (1) mit dem hinteren Träger (31) einerseits über Winkelprofile (39), welche mit den Ösen (9, 11) zusammenwirken, und andererseits über im Wesentlichen ringförmige Trägerplatten (35), welche mit den Stiften (27, 29) zusammenwirken, verbunden ist.

7. Gesamtheit nach Anspruch 6, **dadurch gekennzeichnet, dass** Puffer aus Kautschuk (37) zwischen die im Wesentlichen ringförmigen Trägerplatten (35) und die Stifte (27, 29) gesetzt sind.

8. Gesamtheit einer Kraftfahrzeugkarosserie und eines Gehäuses (1) entsprechend zu irgendeinem der Ansprüche 3 bis 5, **dadurch gekennzeichnet, dass** das Gehäuse (1) mit der Karosserie über zwei Verbindungsstücke (41, 43) verbunden ist, welche mit den Schienen (17, 19) zusammenwirken.

9. Gesamtheit nach Anspruch 8, **dadurch gekennzeichnet, dass** filternde Blöcke aus Kautschuk (45, 47) zwischen die Verbindungsstücke (41, 43) und die Schienen (17, 19) gesetzt sind.

10. Montageverfahren einer Gesamtheit eines hinteren Trägers (31) und eines Gehäuses einer Feststellbremse (1) entsprechend zu einem der Ansprüche 6 oder 7 an einer Kraftfahrzeugkarosserie, **dadurch gekennzeichnet, dass** es die Schritte aufweist bestehend aus:
- Befestigen der Winkeleisen (39) an den Ösen (9, 11),
- Platzieren des (der) Stiftes (Stifte) (27, 29) in der (den) im Wesentlichen ringförmigen Platte(n) (35),
- Befestigen der Winkeleisen (39) an dem oberen Teil des hinteren Trägers (31) und
- Montieren des hinteren Trägers (31) an der Karosserie (33).

11. Montageverfahren eines Gehäuses einer Feststellbremse (1) entsprechend zu einem der Ansprüche 8 oder 9 in Kombination mit einem der Ansprüche 4 oder 5 an einer Kraftfahrzeugkarosserie, **dadurch gekennzeichnet, dass** es die Schritte aufweist bestehend aus:
- Montieren der Verbindungsstücke (41, 43) an den Aussparungen (21, 23) der Schienen (17, 19),
- Platzieren des Gehäuses (1) auf einer Montageplattform (49), welche eine Mehrzahl von Führungsbauteilen (50, 51) aufweist, derart, dass mindestens das eine (51) dieser Bauteile mit dem einen (29) der Stifte (27, 29) zusammenwirkt,
- Verlagern der Plattform (49), derart, um das Gehäuse (1) unter die Karosserie zu bringen, und
- Befestigen der Verbindungsstücke (41, 43) unter der Karosserie.
